(19) Europäisches Patentamt / European Patent Office / Office européen des brevets

(11) **EP 2 543 856 B1**

(12) **EUROPEAN PATENT SPECIFICATION**

(45) Date of publication and mention
of the grant of the patent:
**20.06.2018 Bulletin 2018/25**

(51) Int Cl.:
*F02D 41/00* (2006.01)   *F02D 41/02* (2006.01)
*F02B 39/16* (2006.01)

(21) Application number: **12175211.7**

(22) Date of filing: **05.07.2012**

(54) **Method for controlling a supercharged internal combustion engine**

Verfahren zur Steuerung eines aufgeladenen Verbrennungsmotors

Procédé pour contrôler un moteur à combustion interne suralimenté

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.07.2011 IT BO20110400**

(43) Date of publication of application:
**09.01.2013 Bulletin 2013/02**

(73) Proprietor: **Magneti Marelli S.p.A.
Corbetta (MI) (IT)**

(72) Inventor: **Panciroli, Marco
40100 Bologna (IT)**

(74) Representative: **Bergadano, Mirko et al
Studio Torta S.p.A.
Via Viotti, 9
10121 Torino (IT)**

(56) References cited:
**EP-A1- 1 323 912     EP-A1- 2 014 894
EP-A2- 0 952 324     US-A- 6 161 384
US-A1- 2004 118 117     US-A1- 2007 022 752
US-B1- 6 672 060**

**Description**

TECHNICAL FIELD

The present invention relates to a method for controlling a supercharged internal combustion engine.

PRIOR ART

As known, some internal combustion engines are provided with a turbocharger supercharging system, which can increase the power developed by the engine by exploiting exhaust gas enthalpy for compressing the air aspirated by the engine, and thus increasing volumetric intake efficiency.

A turbocharger supercharging system comprises a turbocharger provided with a turbine, which is arranged along an exhaust pipe to turn at a high speed under the bias of the exhaust gases expelled by the engine, and with a compressor, which is turned by the turbine and is arranged along the air feeding pipe to compress the air aspirated by the engine.

A rather evident turbo lag usually occurs when a considerable, sudden, rapid increase of torque or power is requested in a low torque or power condition (low rpm and slow speed), i.e. when the driver floors the accelerator pedal, e.g. for overtaking. Turbo lag is the tendency of engines with turbocharger of fail to respond with power to the fast pressing of the accelerator pedal, and is particularly annoying in the case of sports car applications, in which the turbocharger supercharging system allows to reach high performance. Turbo lag is mainly caused by the inertia moment of the rotor, and occurs in case of sudden, rapid request for more torque or power and because the pressure must increase in the overall volume of the circuit downstream of the compressor.

Various solutions have been suggested over the years to attempt to reduce turbo lag and to further improve the performance of engines provided with turbocharger. For instance, a variable geometry turbocharger or a turbocharger comprising a plurality of turbines in serial or parallel configuration etc. may be used. All the solutions known until now are in all cases particularly disadvantageous in terms of costs and overall dimensions.

For example, US2004118117 relates to a method for controlling a supercharged internal combustion engine comprising the step of determining a supercharging reserve to be used in case of an increase of requested torque and controlling the supercharged internal combustion engine as a function of the said supercharging reserve.

DESCRIPTION OF THE INVENTION

It is the object of the present invention to provide a method for controlling an internal combustion engine supercharged by means of a turbocharger, which control method is easy and cost-effective to implement and, in particular, is capable of drastically reducing turbo lag without compromising fuel consumption.

According to the present invention, a method for controlling an internal combustion engine supercharged by means of a turbocharger is provided as disclosed in the appended claims.

BRIEF DESCRIPTION OF THE DRAWINGS

The present invention will now be described with reference to the accompanying drawings, which show a non-limitative embodiment thereof, in which:

-    figure 1 diagrammatically illustrates a first embodiment of an internal combustion engine supercharged by means of a turbocharger and provided with an electronic control unit which implements a control method according to the present invention;
-    figure 2 diagrammatically illustrates a detail of a second embodiment of the supercharged internal combustion engine in figure 1; and
-    figure 3 is a block chart of a possible control algorithm which supplies the target pressure starting from the torque request.

PREFERRED EMBODIMENTS OF THE INVENTION

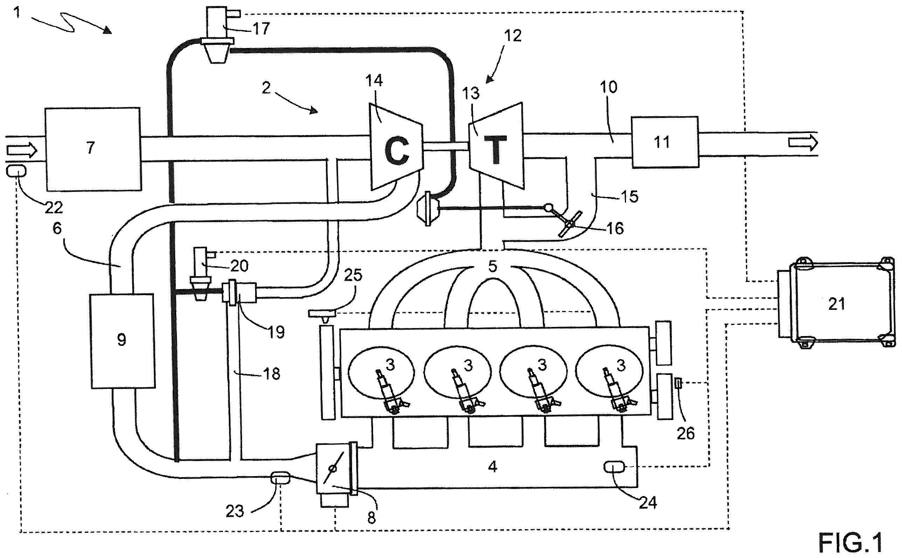

In figure 1, numeral 1 indicates as a whole an internal combustion engine supercharged by means of a turbocharger supercharging system 2.

The internal combustion engine 1 comprises four cylinders 3, each of which is connected to an intake manifold 4 by means of at least one respective intake valve (not shown) and to an exhaust manifold 5 by means of at least one respective exhaust valve (not shown). The intake manifold 4 receives fresh air (i.e. air coming from the external environment) through an intake pipe 6, which is provided with an air cleaner 7 and is adjusted by a throttle 8. An intercooler 9 for cooling the intake air is arranged along the intake pipe 6. An exhaust pipe 10, which feeds the exhaust gases produced by combustion to an exhaust system, is connected to the exhaust manifold 5, which exhaust pipe emits the gases produced by the combustion into the atmosphere and normally comprises at least one catalyzer 11 and at least one silencer (not shown) arranged downstream of the catalyzer 11.

The supercharging system 2 of the internal combustion engine 1 comprises a turbocharger 12 provided with a turbine 13, which is arranged along the exhaust pipe 10 to turn at high speed under the bias of the exhaust gases expelled from the cylinders 3, and a compressor 14, which is arranged along the intake pipe 6 and is mechanically connected to the turbine 13 in order to be rotatably fed by the turbine 13 itself and increase the pressure of the air fed into the intake pipe 6.

A bypass pipe 15 is arranged along the exhaust pipe 10 and connected in parallel to the turbine 13 so that its ends are connected upstream and downstream of the turbine 13 itself. A wastegate valve 16 is arranged along the bypass pipe 15, is adapted to adjust the exhaust gas flow-rate flowing through the bypass pipe 15 and is driven by an actuator 17. A bypass pipe 18 is arranged along the exhaust pipe 6 and is connected in parallel to the compressor 14 so that its ends are connected upstream and downstream of the compressor 14 itself. A Poff valve 19 is arranged along the bypass pipe 18, adapted to adjust the exhaust gas flow flowing through the bypass pipe 18 and driven by an actuator 20.

In the description above explicit reference is made to an internal combustion engine 1 supercharged by means of a turbocharger 12. Alternatively, the control method described above may be advantageously applied to any internal combustion engine, supercharged by means of a dynamic or volumetric compressor, for instance.

According to a first variant, the internal combustion engine 1 is provided with an electric machine mechanically connected to the turbocharger 12 and set up to recover exhaust gas energy; in this variant, it is possible both to deliver the necessary torque by consuming electricity and to brake by delivering electricity.

Alternatively, the control method described above can be applied to a supercharged internal combustion engine of the type described in patent application EP-A1-2096277, which comprises a turbine, a compressor mechanically independent from the turbine, an electric generator rotatably fed by the turbine for generate electricity and an electric motor which rotatably feeds the compressor.

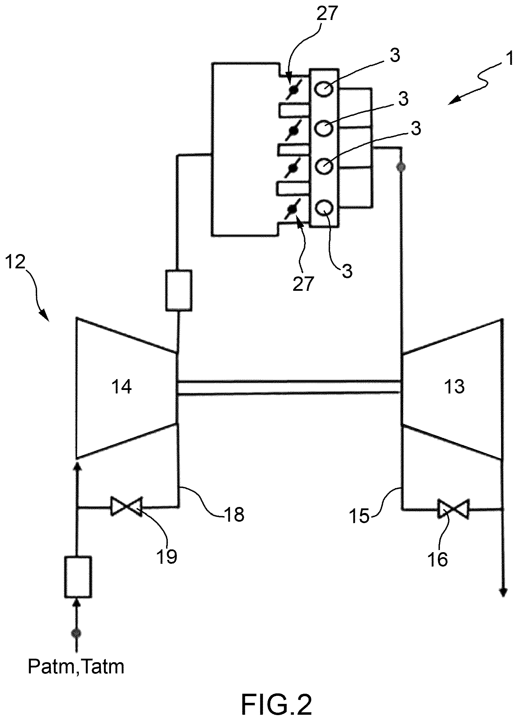

In general, the embodiments described above have in common the fact that there is an air volume between the compressor 14 and the cylinders 3. The mass of air entrapped in each cylinder 3 for each engine cycle may be regulated by means of a respective intake valve (not shown) by means of a valve actuation device with a variable opening law, such as an electromagnetic or electrohydraulic camless actuation device. Alternatively, the mass of air entrapped in each cylinder 3 for each engine cycle is regulated by means of the interposition of a valve 27, preferably a throttle as shown in figure 2, between the compressor 14 and the intake valves. As a possible further alternative, a valve actuation device with variable opening law may be provided and a valve 27, preferably a throttle, may be inserted between the compressor 14 and the intake valves.

The internal combustion engine 1 is controlled by an electronic control unit 21, which governs the operation of all the components of the internal combustion engine 1, including the supercharging system 2. In particular, the electronic control unit 21 drives the actuators 17 and 20 of the wastegate valve 16 and of the Poff valve 19. The electronic control unit 21 is connected to sensors 22, which measure the temperature $T_o$ and the pressure $P_o$ along the intake pipe 6 upstream of the compressor 14, to sensors 23, which measure the temperature and pressure along the intake pipe 6 upstream of the throttle 8, and to sensors 24, which measure the temperature and pressure inside the intake manifold 4. Furthermore, the electronic control unit 21 is connected to a sensor 25, which measures the angular position (and thus the rotation speed) of a crankshaft of the internal combustion engine 1, and to a sensor 26, which measures the timing of the intake and/or exhaust valves. It is similarly worth noting that no sensors adapted to measure the rotation speed of the turbocharger 12 are needed.

Among other things, the electronic control unit 21 is set up to manage a supercharging reserve which allows to optimize the performance of the internal combustion engine 1. The control method used by the electronic control unit 21 for managing the supercharging reserve is described below.

This control method includes maintaining an actual supercharging pressure Pobj (corresponding to the target pressure Pobj for control) higher than the minimum target supercharging pressure Pobj_loaded capable of maintaining the target load, i.e. Ptmin. This method may be penalizing from the point of view of fuel consumption, because it may force the engine control to partially close the throttle 8 with consequent reduction of efficiency; in this case, the compression work of the turbocharger 12 is partially wasted, counter-pressure in exhaust increases along with the pumping work of the pistons, with a consequent increase of fuel consumption. On the other hand, this control method improves transient performance because the turbocharger 12 is maintained constantly active and is thus capable of starting operation very rapidly (i.e. the supercharging reserve can be used in case of need).

The turbocharger 12 responds rapidly without appreciable turbo lag when a sudden, rapid request is made in a low torque or power condition (low rpm and slow speed), e.g. when the driver decisively floors the accelerator pedal).

In particular, the aforesaid control method includes determining a minimum supercharging pressure value $Pt_{min}$ and a maximum supercharging pressure value $Pt_{max}$ which guarantee the target load, i.e. the mass of air needed by the engine to generate the desired torque.

The difference between the maximum supercharging pressure value $Pt_{max}$ and the minimum supercharging value $Pt_{min}$ defines a maximum supercharging reserve $RDS_{max}$.

The actual supercharging pressure Pobj, which becomes the control target, is kept higher than the minimum target supercharging pressure Ptmin and is equal to a value comprised within the maximum supercharging reserve $RDS_{max}$.

For this reason, an actual supercharging reserve RDS, which is equal to the difference between the actual supercharging pressure Pobj and the minimum target supercharging pressure Ptmin needed to guarantee the target load, can be defined. The actual supercharging reserve RDS in case of need allows the turbocharger 12 to start operation very rapidly.

It is further possible to define a degree of supercharging reserve GRDS as the ratio between the actual supercharging reserve RDS and the maximum supercharging reserve RDSmax.

The extent of the actual supercharging reserve RDS may be determined as a function of a plurality of targets. In particular, it is possible to assume to alternatively optimize one of the following targets or a combination thereof:

- global efficiency of the internal combustion engine 1 and of the turbocharger 12 (i.e. to optimize the specific global fuel consumption $c_s$ of the internal combustion engine 1);
- specific fuel consumption $c_s$ in each engine point;
- fuel consumption for each driving cycle;
- acceleration of the internal combustion engine 1;
- reduction of turbo lag of the turbocharger 12;
- energy management if an electric motor (not shown) mechanically or electrically connected to the turbocharger is present;
- etc.

Furthermore, the extent of the actual supercharging reserve RDS is variable as a function of a plurality of parameters. Some of these parameters may be determined during a preliminary step of setting up and tuning of the electronic control unit 21, while other parameters may be determined while driving by the car driver.

The extent of the actual supercharging reserve RDS may be varied as a function of the position of the joystick which determines the operating mode chosen by the driver. In particular, according to a first variant, it is possible to differentiate between a sports operating mode and a normal operating mode; typically, indeed, sports operating mode privileges performance, while a normal operating mode privileges reduction of fuel consumption. A "less reactive control" (less or no supercharging reserve RDS) is used when normal operating mode, which privileges reduction of fuel consumption, is selected, while a "more reactive control" (higher supercharging reserve RDS) is used with the aim of considerably decreasing turbo lag when sports operating mode is selected.

According to a further variant, the driver may choose from a plurality (usually four) of different positions of the joystick to which different supercharging extents correspond, e.g. on Formula 1 cars.

The extent of the actual supercharging reserve RDS may be varied as a function of the point of the race track and/or of the road where the car is at.

The supercharging reserve RDS may be determined as a function of the point of the race track in order to guarantee the maximum acceleration after corners, pick up on straights and boost top speed by optimizing the performance-fuel consumption trade-off.

According to one variant, the electronic control unit 21 is connected to the car navigator so as to acquire the necessary information by means of the navigator maps. The point of the race track or road where the car is at may be expressed either as the distance from a predetermined point of a race track (typically, e.g. the arrival line) in case of sports applications or more in general by means of the coordinates (latitude, longitude and altitude) thereof. According to the invention, the extent of the actual supercharging reserve RDS is variable as a function of the point of the race track of the race being disputed and the number of laps left to finish the race or a desired residual distance to be covered. The extent of the actual supercharging reserve RDS may be varied also as a function of the filling state of the fuel tank. In this case, the extent of the actual supercharging reserve RDS may be determined as a function of the amount of fuel left in the tank and as a function of the number of laps left in a race being disputed, in case of sports applications. Alternatively, for applications on standard cars, the extent of the actual supercharging reserve RDS may be determined as a function of the amount of fuel left in the tank and as a function of the kilometers left to the traveled to reach destination, in the case in which the electronic control unit 21 is connected to the navigator of the car and the driver has previously set a route. According to a further possible variant, the extent of the actual supercharging reserve RDS is determined as a function of the residual range desired by the driver of the car.

Finally, the extent of the actual supercharging reserve RDS may be varied as a function of the difference between the maximum deliverable torque Cmax of the internal combustion engine 1 and the actual torque C delivered by the supercharged internal combustion engine 1. In this case, the actual supercharging reserve RDS tends to zero when the actual torque C delivered by the internal combustion engine 1 tends to the maximum deliverable torque Cmax of the internal combustion engine 1, and vice versa.

Essentially, the actual torque C delivered by the internal combustion engine 1 is lower than the maximum deliverable torque Cmax of the internal combustion engine 1 when the car corners; thus, the actual supercharging reserve RDS is different from zero. The actual supercharging reserve RDS allows to rapidly deliver the requested torque when the driver decisively floors the accelerator pedal to request more torque to tackle the next straight. When the car is on the straight, instead, the actual torque C delivered by the internal combustion engine 1 tends to be equal to the maximum deliverable torque Cmax of the internal combustion engine 1 and thus the actual supercharging reserve RDS tends to zero.

It is equally apparent that the actual supercharging reserve RDS may be selectively determined as a function of one of the factors listed above or by a combination of said factors.

According to a preferred variant, in order to optimize the fuel consumption of the internal combustion engine 1, the target supercharging pressure $P_{obj}$ is equal to a pressure value comprised between the minimum supercharging pressure value $Pt_{min}$ and the maximum supercharging pressure value $Pt_{max}$. The target supercharging pressure value Ptobj_csmin capable of minimizing specific fuel consumption $c_s$ is a value which may be determined experimentally for all engine points.

The target supercharging pressure $P_{obj}$ capable of minimizing specific fuel consumption $c_s$ is variable as a function of the rotation speed n expressed in revolutions per minute [rpm] and of the load C. The load C may, in turn, be determined by the actual delivered torque Ce, by the positive indicated torque Ci+, by the indicated torque Ci or yet again by the intake volumetric efficiency (obtained from the ratio between air mass entrapped in each cylinder 3 for each cycle and the mass of air which fills each cylinder 3 for each cycle in reference conditions).

More generally, the supercharging pressure $P_{obj}$ may be expressed as follows:

$$Ptobj\_csmin=f(C, \quad n, \quad throttle \quad position, \quad vvt$$

$$position, \quad vva \quad lift, \quad EGR)$$

In other words, the supercharging pressure Ptobj_csmin capable of minimizing the specific fuel consumption of the engine is determined as a function of engine point, load and rotation speed, throttle position (if present), variable valve lift rule, timing and finally EGR position or amount.

In case of a simple engine, i.e. one provided with a turbocharger 12, motorized throttle and a traditional distribution law (i.e. with fixed timing and fixed valve lift), the supercharging reserve RDS capable of minimizing the specific fuel consumption of the engine tends to be canceled out, i.e. the throttle tends to wide open WOT position.

According to a preferred variant, the minimum supercharging pressure value $Pt_{min}$ and the maximum supercharging pressure value $Pt_{max}$ may be determined as follows.

According to a preferred variant, the maximum supercharging pressure value $Pt_{max}$ is the maximum permitted supercharging pressure of the turbocharger 12 and/or the pressure value which corresponds to the maximum torque $C_{max}$ delivered by the internal combustion engine 1.

The maximum supercharging pressure value $Pt_{max}$ is variable as a function of the reduced mass flow rate $M_R$ of the compressor 14.

Pt_max_ass(Mrid), i.e. the maximum achievable pressure, is experimentally determined during a preliminary step of setting up and tuning of the internal combustion engine 1 as a function of the reduced absolute mass flow rate, i.e. in the most favorable ambient conditions (atmospheric pressure and ambient temperature), and a function of the electric machine, in case of turbo compound (law which essentially corresponds to wastegate valve 16 tending to closed compatibly with the structural limits of the turbocharger or 12 or turbo compound).

The characteristic curves of the compressor 14 (supplied by the manufacturer of the turbocharger 12) on a reduced mass flow rate/compression ratio plane are analyzed during a step of designing and tuning of the internal combustion engine 1. The curves which limit the rotation speed of the turbocharger and the pumping of the turbocharger 12 are determined by analyzing the characteristic operation curves of the compressor 14; and the target pressure downstream of the compressor 14 is limited as a function of the aforesaid characteristic curves. The maximum supercharging pressure value Pt_max_ass(Mrid) defined above is thus limited by the supercharging pressure value obtained as the product of the limit compression ratio (variable as a function of the reduced mass curve and obtained by analyzing the characteristic curves of the compressor 14) and the pressure value upstream of the compressor 14, which is simply atmospheric pressure minus the respective load losses.

5

According to a preferred variant, the limit compression ratio is variable as a function of a dynamic index $\Delta$dyn which allows to modify said characteristic operating curves of the compressor 14; said dynamic index $\Delta$dyn is determined, according to a preferred variant, as a function of the reduced mass flow rate of the compressor 14 and of the reduced mass flow rate dynamics of the compressor 14.

For a better understanding of the strategies described above (for determining the maximum supercharging pressure value $Pt_{max}$, the dynamic index $\Delta$dyn etc.) explicit reference is made to that described in European patent EP-B1-1741895, European patent EP-B1-2014894, Italian patent application BO2010A000579, Italian patent application BO2010A000604 and Italian patent application BO2010A000605.

In general, the maximum supercharging pressure value Ptmax may be expressed in the following manner:

$$Ptmax\,(Mrid)\,=min\,(Pt\_max\_ass\,(Mrid)\,,\,(RRCOMPLIM\,(Mrid)\,+\Delta$$

$$dyn\,(Mdyn,Mrid)\,)\,*Pupstream\_of\_compressor)$$

Or, according to a variant:

$$Ptmax\,(Mrid)\,=\,(RRCOMPLIM\,(Mrid)\,+\Delta dyn\,(Mdyn,Mrid)\,)\,*Pupst$$

$$ream\_of\_compressor$$

According to a variant, the maximum supercharging pressure Ptmax is saturated in the following manner:

$$Ptmax=\,min\,(Ptmax\,(Mrid)\,,Ptcmax\,(n)\,)$$

at the minimum pressure value between the pressure values which correspond to maximum torque delivered as a function of the rotation speed n expressed in revolutions per minute [rpm] and maximum supercharging pressure value $Pt_{max}$ as a function of the reduced mass flow rate $M_R$ of the compressor 14 described above. According to a further variant, the maximum supercharging pressure value Ptmax is equal to the pressure value which corresponds to the maximum torque delivered as a function of the rotation speed N expressed in revolutions per minute [rpm]. The following equation applies: Ptmax=Ptcmax(n).

The minimum supercharging pressure $Pt_{min}$ is the minimum supercharging pressure which allows to achieve the desired actual engine torque; essentially, $Pt_{min}$ is the minimum pressure which guarantees the entrapped air mass necessary to supply the desired torque to the drive shaft, taking into account friction, pumping work and auxiliary loads (air conditioner, rear window wiper etc.) and all engine parameters (spark advance, mixture titration, actuator position etc.).

For example, in the case of an internal combustion engine 1 of the type illustrated in figure 1 (i.e. provided with a turbocharger 12 with wastegate valve 16, a Poff valve 19, throttle 8, in particular of the DBW type), the minimum supercharging pressure value $Pt_{min}$ may be determined during a preliminary step of setting up and tuning of the supercharged internal combustion engine 1 by means of a series of engine bench tests and may be calculated by means of a filling model of the internal combustion engine 1, e.g. of the speed density type p=f (mass, engine speed, actuator position, air temperature, coolant temperature etc.).

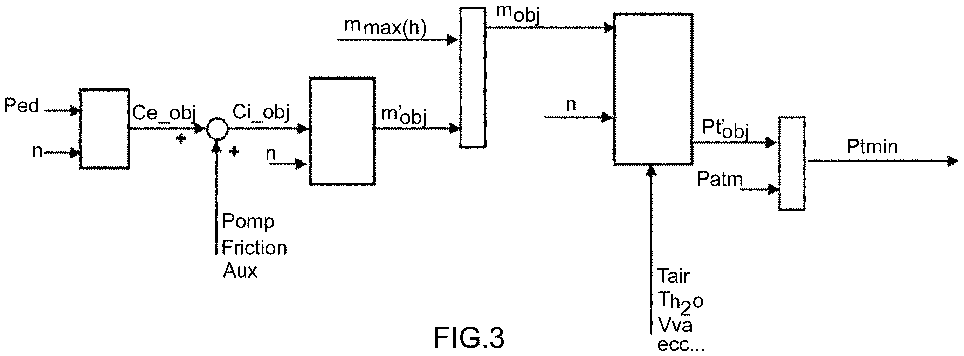

Figure 3 shows a possible control model which supplies Ptmin starting from the torque request.

The request of actual torque Ce_obj (to drive shaft) by the driver is determined by the position of the accelerator pedal Ped, e.g. by means of a map. Engine friction requests, pumping working Pomp and auxiliary loads Aux must be taken into consideration in addition to the request for actual torque Ce_obj. The average positive indicated torque Ci_obj is determined in this manner. A map, which supplies the necessary air mass $m'_{obj}$, as a function of the average positive indicated torque Ci_obj and the engine speed n, is thus used. Such a map is the inverse of the specific fuel consumption Cs.

The necessary air mass $m'_{obj}$ thus obtained is saturated to a maximum air mass value $m_{max}(n)$, which is, in turn, determined by the maximum torque and is variable as a function of the engine speed n.

The necessary pressure Pt'obj upstream of the intake valve may be determined by means of the filling model from the obtained actual air mass $m_{obj}$; such a pressure Pt'obj minus load losses is the minimum pressure needed in the supercharging circuit, which saturates at atmospheric pressure, and supplies the minimum target supercharging pressure Ptmin.

In some cases, the supercharging reserve RDS may be such to reduce specific fuel consumption in case in which the lift law of the variable intake valve leads to a reduction of pumping work. In other words, the supercharging reserve RDS may allow to deliver the same torque with a higher minimum target supercharging pressure Ptmin, and consequently specific fuel consumption $c_s$ is reduced and reactivity is achieved in case of request for torque increase and/or acceleration by virtue of the supercharging reserve, the delivered torque being equal. The variable lift law actuator which controls the intake valve may be, for instance, of the camless electromagnetic type (which allows any timing) or hydroelectric (which allows any type of lift, and consequently maximum lift and timing).

Essentially, the electronic control unit 21 determines the target torque $C_{i\_obj}$ when the car driver requests torque C by flooring the accelerator pedal. At the torque (positive indicated, indicated or actual) target torque $C_{i\_obj}$ corresponds to a target air mass to be entrapped in the cylinders 3 which must be saturated at a maximum target air mass value variable as a function of the rotation speed N expressed in revolutions per minute [rpm], to which the maximum engine torque is associated. In turn, the electronic control unit 21 makes a target pressure Ptobj' in the intake manifold 4, which saturates at atmospheric pressure and supplies (minus load losses) the minimum target supercharging pressure Ptmin, correspond to the target air mass.

According to a variant, in the case in which the supercharging reserve RDS is minimum with the target of minimizing specific fuel consumption Cs, the supercharging reserve RDS may be determined with the aim of optimizing an additional parameter. In particular, the supercharging reserve RDS may be determined to optimize the efficiency $\eta_{turbo}$ of the turbocharger 12. As known, the efficiency $\eta_{turbo}$ of the turbocharger 12 is obtained as the product of the efficiency $\eta_t$ of the turbocharger 13, of the efficiency $\eta_c$ of the compressor 14 and of organic efficiency $\eta_o$. Usually, the efficiency $\eta_c$ of the compressor 14 is variable as a function of the supercharging ratio and of the reduced mass flow rate of the compressor 14, while the efficiency $\eta_t$ of the turbine 13 is variable as a function of the expansion ratio and of the mass flow rate of the turbine 13. In this manner, the increase of specific fuel consumption Cs can be limited and at the same time it is possible to benefit from the dynamic advantage deriving from the supercharging reserve RDS.

Therefore, in other words, according to this variant, the target supercharging pressure $P_{obj}$ is equal to the pressure $P_{etactmax}$ which allows to optimize the efficiency $\eta_{turbo}$ of the turbocharger 12.

According to a further variant, instead, in the case in which the supercharging reserve RDS is zero with the target of minimizing specific fuel consumption Cs, the supercharging reserve RDS may be determined with the aim of optimizing a further parameter. In particular, the supercharging reserve RDS may be determined in order to optimize the overall efficiency of the turbocharger 12 and of a possible electric machine connected thereto for recovering energy. This variant may be advantageously applied, in particular to comply with new F1 regulations.

Consequently, in other words, according to this variant, the target supercharging pressure $P_{obj}$ is equal to the pressure $P_{etatcelmax}$ which allows to optimize overall efficiency of the turbocharger 12 and of the electric machine connected to the turbocharger 12 for recovering energy and/or accelerating the rotor. A plurality of electric machines may be inserted. The rotation speed of the turbo machine 12, and consequently of the possible mechanically connected electric machine, is associated to the supercharging pressure and the reduced mass flow rate, while efficiency is associated to the rotation speed of the turbo machine 12 and the electric load.

In the case of a car involved in a Grand Prix race, the degree of supercharging reserve may be determined in the following manner:

$$GRDS = f_0\ (x_c,\ joystick\_sat)\ *\ f_1\ (C_{max} - C)$$

wherein:

$$joystick\_sat = min\ (joystick,\ joystick\_lim)$$

and in turn:

$$joystick\_lim = f_2\ (L\ /\ Nrace\_left *\ f_3\ (L))$$

Where $x_c$ means the position of the car along the Grand Prix race track; the position of the car is typically expressed as the distance from the arrival line.

Joystick instead means the joystick position selected by the car driver. The joystick positions to choose from are, for instance, four, indicated by increasing numbers/digits. It is worth noting that the extent of the supercharging reserve RDS increases, and consequently so does fuel consumption, as the selected joystick position increases. Consequently, for example, position 3 of the joystick corresponds to a more extensive supercharging reserve RDS and higher fuel consumption than that which corresponds to position 1 of the joystick.

L indicates the residual fuel mass available in the tank and Nrace_left indicates the number of laps left to finish the Grand Prix race.

Joystick_lim means instead the joystick position which corresponds to the maximum residual supercharging reserve RDS allowing the car to finish the race. Function $f_2$ is the inverse fuel consumption function per each lap of the Grand Prix race as a function of the selected joystick position, i.e. the mapping of the degree of supercharging reserve GRDS at the position on the race track. Typically, this function is represented by a vector in which a mapping of the supercharging reserve, and consequently of a fuel consumption per lap with such a degree of supercharging reserve GRDS corresponds to each selectable joystick position.

Joystick_sat means instead the joystick position which corresponds to the supercharging reserve selected by the driver (by selecting the joystick position) which is saturated to the value of the supercharging reserve allowing the car to finish the Grand Prix race (and calculated by means of joystick_lim).

Function $f_1$ is a function of the difference between the maximum delivered torque $C_{max}$ and the delivered torque C. The value of the function f1 reduces the extent of the supercharging reserve the more the torque C approaches the maximum deliverable torque $C_{max}$.

Function $f_0$ is a function, typically represented by a map, which defines the supercharging reserve RDS for each position of the car along the Grand Prix race track and for each selectable position of the joystick; i.e. several mappings of the degree of supercharging reserve GRDS for position on the race track may be defined as a function of the joystick position. As previously explained, the extent of the degree of supercharging reserve GRDS is higher at the higher joystick positions. The trade-off between performance and fuel consumption is implicit in the function $f_0$ (xc,joystick).

Alternatively, in the case in which the car is used during qualifiers and not for the Grand Prix race, the car's performance can be boosted to the maximum (and consequently the extent of the supercharging reserve RDS can be increased) to the detriment of fuel consumption of the car.

According to a further alternative, joystick_sat can be determined in a different manner. In the case in which the selected joystick position is different from the maximum selectable position (e.g. the position indicated by "4"), i.e. that to which the maximum extent of the supercharging reserve RDS corresponds, then joystick_sat is determined as explained above, i.e. as the supercharging reserve selected by the driver (by selecting the joystick position) which is saturated to the value of the supercharging reserve allowing the car to finish the Grand Prix race (and calculated by means of joystick_lim).

In the case in which the selected position of the joystick is equal to the maximum selectable position (.g. the position indicated by "4"), i.e. the one which corresponds to the maximum extent of the supercharging reserve RDS, then joystick_sat is determined differently as a function of the value assigned to the joystick_lim variable. In the case in which the joystick_lim is equal to 1, then the joystick_sat is also equal to 1. Instead, in the case in which the joystick_lim is higher than 1, then the joystick_sat is equal to the joystick variable decreased by 1.

Because joystick_sat is the supercharging reserve selected by the driver allowing the car to finish the Grand Prix race at the same time, it is important to maintain a supercharging reserve of modest extent available to allow the car to finish the Grand Prix race if joystick_lim is equal to 1 (i.e. to the position which corresponds to the minimum extent of supercharging reserve). In the case in which joystick_lim is other than 1 (i.e. in the position which corresponds to the minimum extent supercharging reserve) the increase the extent of the supercharging reserve may be increased instead for a limited period of time.

For example, this condition may occur in the case in which the driver selects joystick position 4 to allow the car to overtake on a straight or to run a lap pushing the car to the limit of its performance. Obviously, the average supercharging reserve RDS during the remaining laps of the race will be compromised but it will be possible to finish the Grand Prix race in all cases.

The method for controlling the supercharged internal combustion engine 1 described above has many advantages.

Firstly, the control method described above is simple and cost-effective to implement in an electronic control unit of an internal combustion engine 1 because it requires neither hardware modifications nor high calculation capacity nor high memory storage capacity.

Furthermore, the control method described above allows to always obtain a very rapid response in any operating modes of a supercharged internal combustion engine 1 because the supercharging air circuit is already pressurized and the turbocharger 12 already has a higher speed to respond to the requests for more drive torque C. In addition to drastically reducing turbo lag, the control method described above allows to vary the response of the turbocharger 12 as a function of a plurality of parameters and as a function of the desires of the driver and at the same allows to optimize the trade-off between fuel consumption and performance.

**Claims**

**1.** A method for controlling a supercharged internal combustion engine (1) by means of a turbocharger (12) provided with a turbine (13) and a compressor (14); the control method comprises the steps of:

- determining a target supercharging pressure (Ptmin) capable of guaranteeing the target torque (Ci_obj) requested by the car driver by the position of the accelerator pedal;
- determining a target pressure (Pobj) for control, higher than the target supercharging pressure (Ptmin);
- determining an actual supercharging reserve (RDS) to be used in case of an increase of requested target torque (Ci_obj) and equal to the difference between the target pressure (Pobj) for control and the target supercharging pressure (Ptmin); and
- controlling the supercharged internal combustion engine (1) as a function of the actual supercharging reserve (RDS);

the method is **characterized in that** the target pressure (Pobj) for control is variable as a function of a number of operative parameter of the supercharged internal combustion engine (1) and comprises the further steps of:

determining the point of the race track during a race which is being disputed and the number of laps left to finish the race or a desired residual distance to be covered; and

varying the extent of the actual supercharging reserve (RDS) as a function of the point of the race track of the race which is being disputed, and of the number of laps left to finish the race or of the desired residual distance to be covered.

2. A control method according to claim 1, wherein the target pressure (Pobj) for control is variable as a function of the rotation speed (n) and of the load of the supercharged internal combustion engine (1).

3. A control method according to any previous claim, and comprising the further steps of:

selecting a desired operating mode from a number of possible operating modes, which include a sports operating mode which privileges performance , and a standard operating mode which privileges reduction of fuel consumption; and
varying the extent of the actual supercharging reserve (RDS) as a function of the selected mode.

4. A control method according to any previous claims and comprising the further steps of:

determining the point of the race track and/or where the car is at; and
varying the extent of the actual supercharging reserve (RDS) as a function of the point of the race track and/or of the road where the car is at.

5. A control method according to any previous claim and comprising the further steps of:

determining the filling level of a fuel tank of the supercharged internal combustion engine (1); and
varying the extent of the actual supercharging reserve (RDS) as a function of the filling state of the fuel tank.

6. A control method according to any previous claim and comprising the further steps of:

selecting a desired operating mode from a number of possible operating modes, which include a sports operating mode which privileges performance, and a standard operating mode which privileges reduction of fuel consumption; and
determining the desired supercharging reserve (RDS), to be used in case of an increase in the requested target torque (Ci_obj) and variable as a function of the desired operating mode and of the position on the Grand Prix race track.

7. A control method according to any previous claim and comprising the further steps of:

determining the actual torque (C) delivered by the supercharged internal combustion engine (1);
calculating the difference between the maximum deliverable torque (Cmax) of the internal combustion engine (1) and the actual torque (C) delivered by the supercharged internal combustion engine (1); and
varying the extent of the actual supercharging reserve (RDS) as a function of the difference between the maximum deliverable torque (Cmax) of the internal combustion engine (1) and the actual torque (C) delivered by the supercharged internal combustion engine (1) .

8. A control method according to any previous claim wherein the target supercharging pressure (Ptmin) corresponds to the minimum supercharging pressure (Ptmin) needed to guarantee the target torque (Ci_obj).

**Patentansprüche**

1.  Verfahren zur Regelung eines aufgeladenen Verbrennungsmotors (1) mittels eines mit einer Turbine (13) und einem Verdichter (14) ausgerüsteten Turboladers (12), wobei das Verfahren folgende Schritte umfasst:

    - Bestimmen eines Ladesolldrucks (Ptmin), bei dem das von dem Autofahrer durch die Stellung des Gaspedals verlangte Solldrehmoment (Ci_obj) garantiert ist;
    - Bestimmen eins Regelungssolldrucks (Pobj), der höher ist als der Ladesolldruck (Ptmin);
    - Bestimmen einer Istladereserve (RDS), die im Falle einer Erhöhung des verlangten Solldrehmoments (Ci_obj) genutzt wird und gleich der Differenz zwischen dem Regelungssolldruck (Pobj) und dem Ladesolldruck (Ptmin) ist; und
    - Regelung des aufgeladenen Verbrennungsmotors (1) in Abhängigkeit von der Istladereserve (RDS);

    wobei das Verfahren **dadurch gekennzeichnet ist, dass** der Regelungssolldruck (Pobj) in Abhängigkeit von der Anzahl der Betriebsparameter des aufgeladenen Verbrennungsmotors (1) variabel ist und zudem folgende Schritte umfasst:

    Bestimmen des Punktes der Rennstrecke während eines zu bestreitenden Rennens und der Anzahl der bis zum Ende des Rennens oder auf einer gewünschten, zu fahrenden Reststrecke verbleibenden Runden; und Variieren des Maßes der Istladereserve (RDS) in Abhängigkeit von dem Punkt des zu bestreitenden Rennens und der Anzahl der bis zum Ende des Rennens oder auf einer gewünschten, zu fahrenden Reststrecke verbleibenden Runden.

2.  Regelungsverfahren nach Anspruch 1, wobei der Regelungssolldruck (Pobj) in Abhängigkeit von der Drehzahl (n) und der Last des aufgeladenen Verbrennungsmotors (1) variabel ist.

3.  Regelungsverfahren nach einem der vorstehenden Ansprüche, das zudem folgende Schritte umfasst:

    Auswahl eines gewünschten Betriebsmodus aus mehreren möglichen Betriebsmodi, darunter ein Sportbetriebsmodus, der die Leistung unterstützt, und ein
    Standardbetriebsmodus, der eine Verringerung des Kraftstoffverbrauchs unterstützt; und
    Variieren des Maßes der Istladereserve (RDS) in Abhängigkeit von dem gewählten Modus.

4.  Regelungsverfahren nach einem der vorstehenden Ansprüche, das zudem folgende Schritte umfasst:

    Bestimmen des Punktes der Rennstrecke und/oder wo sich das Fahrzeug gerade befindet; und
    Variieren des Maßes der Istladereserve (RDS) in Abhängigkeit von dem Punkt der Rennstrecke und/oder der Straße, wo sich das Fahrzeug gerade befindet.

5.  Regelungsverfahren nach einem der vorstehenden Ansprüche, das zudem folgende Schritte umfasst:

    Bestimmen des Füllstands eines Kraftstofftanks des aufgeladenen Verbrennungsmotors (1); und
    Variieren des Maßes der Istladereserve (RDS) in Abhängigkeit vom Füllstand des Kraftstofftanks.

6.  Regelungsverfahren nach einem der vorstehenden Ansprüche, das zudem folgende Schritte umfasst:

    Auswahl eines gewünschten Betriebsmodus aus mehreren möglichen Betriebsmodi, darunter ein Sportbetriebsmodus, der die Leistung unterstützt, und ein
    Standardbetriebsmodus, der eine Verringerung des Kraftstoffverbrauchs unterstützt; und
    Bestimmen der gewünschten Ladereserve (RDS), die im Falle einer Erhöhung des verlangten Solldrehmoments (Ci_obj) genutzt wird und in Abhängigkeit von dem gewünschten Betriebsmodus und der Position auf der Grand-Prix-Rennstrecke variabel ist.

7.  Regelungsverfahren nach einem der vorstehenden Ansprüche, das zudem folgende Schritte umfasst:

Bestimmen des von dem aufgeladenen Verbrennungsmotor (1) gelieferten Istdrehmoments (C);
Berechnen der Differenz zwischen dem maximalen Drehmoment (Cmax), das der aufgeladene Verbrennungsmotor (1) liefern kann, und dem Istdrehmoment (C), das von dem aufgeladenen Verbrennungsmotor (1) geliefert wird; und
Variieren des Maßes der Istladereserve (RDS) in Abhängigkeit von der Differenz zwischen dem maximalen Drehmoment (Cmax), das der aufgeladene Verbrennungsmotor (1) liefern kann, und dem Istdrehmoment (C), das von dem aufgeladenen Verbrennungsmotor (1) geliefert wird.

**8.** Regelungsverfahren nach einem der vorstehenden Ansprüche, wobei der Ladesolldruck (Ptmin) dem Mindestladedruck (Ptmin) entspricht, der benötigt wird, um das Solldrehmoment (Ci_obj) zu garantieren.

## Revendications

**1.** Procédé pour commander un moteur à combustion interne suralimenté (1) au moyen d'un turbocompresseur de suralimentation (12) doté d'une turbine (13) et d'un compresseur (14) ; le procédé de commande comprend les étapes suivantes :

- déterminer une pression de suralimentation cible (Ptmin) pouvant garantir le couple cible (Ci_obj) requis par le conducteur de voiture par la position de la pédale d'accélérateur ;
- déterminer une pression cible (Pobj) pour commande, supérieure à la pression de suralimentation cible (Ptmin) ;
- déterminer une véritable réserve de suralimentation (RDS) à utiliser en cas d'une augmentation de couple cible (Ci_obj) requis et égale à la différence entre la pression cible (Pobj) pour commande et la pression de suralimentation cible (Ptmin) ; et
- commander le moteur à combustion interne suralimenté (1) en fonction de la véritable réserve de suralimentation (RDS) ;

le procédé est **caractérisé en ce que** la pression cible (Pobj) pour commande est variable en fonction d'un certain nombre de paramètres opérationnels du moteur à combustion interne suralimenté (1) et comprend les étapes supplémentaires suivantes :

déterminer le point de la piste de course pendant une course qui est disputée et le nombre de tours restants pour finir la course ou une distance résiduelle souhaitée à couvrir ; et
modifier l'étendue de la véritable réserve de suralimentation (RDS) en fonction du point de la piste de la course qui est disputée et du nombre de tours restants pour finir la course ou de la distance résiduelle souhaitée à couvrir.

**2.** Procédé de commande selon la revendication 1, dans lequel la pression cible (Pobj) pour commande est variable en fonction de la vitesse de rotation (n) et de la charge du moteur à combustion interne suralimenté (1) .

**3.** Procédé de commande selon l'une quelconque des revendications précédentes, et comprenant les étapes supplémentaires suivantes :

sélectionner un mode de fonctionnement souhaité à partir d'un nombre de modes de fonctionnement possibles, qui comprennent un mode de fonctionnement sports qui privilégie la performance, et un mode de fonctionnement standard qui privilégie la réduction de consommation de carburant ; et
modifier l'étendue de la véritable réserve de suralimentation (RDS) en fonction du mode sélectionné.

**4.** Procédé de commande selon l'une quelconque des revendications précédentes et comprenant les étapes supplémentaires suivantes :

déterminer le point de la piste de course et/ou où se trouve la voiture ; et
modifier l'étendue de la véritable réserve de suralimentation (RDS) en fonction du point de la piste de course et/ou de la route où se trouve la voiture.

**5.** Procédé de commande selon l'une quelconque des revendications précédentes, et comprenant les étapes supplémentaires suivantes :

déterminer le niveau de remplissage d'un réservoir de carburant du moteur à combustion interne suralimenté (1) ; et
modifier l'étendue de la véritable réserve de suralimentation (RDS) en fonction de l'état de remplissage du réservoir de carburant.

**6.** Procédé de commande selon l'une quelconque des revendications précédentes et comprenant les étapes supplémentaires suivantes :

sélectionner un mode de fonctionnement souhaité à partir d'un nombre de modes de fonctionnement possibles, qui comprennent un mode de fonctionnement sports qui privilégie la performance et un mode de fonctionnement standard qui privilégie la réduction de consommation de carburant ; et
déterminer la véritable réserve de suralimentation (RDS) à utiliser en cas d'augmentation du couple cible (Ci_obj) requis et variable en fonction du mode de fonctionnement souhaité et de la position sur la piste de course de Grand Prix.

**7.** Procédé de commande selon l'une quelconque des revendications précédentes et comprenant les étapes supplémentaires suivantes :

déterminer le véritable couple (C) fourni par le moteur à combustion interne suralimenté (1) ;
calculer la différence entre le couple maximum pouvant être fourni (Cmax) du moteur à combustion interne (1) et le véritable couple (C) fourni par le moteur à combustion interne suralimenté (1) ; et
modifier l'étendue de la véritable réserve de suralimentation (RDS) en fonction de la différence entre le couple maximum (Cmax) du moteur à combustion interne (1) pouvant être fourni et le véritable couple (C) fourni par le moteur à combustion interne suralimenté (1).

**8.** Procédé de commande selon l'une quelconque des revendications précédentes, dans lequel la pression de suralimentation cible (Ptmin) correspond à la pression de suralimentation minimum (Ptmin) nécessaire pour garantir le couple cible (Ci_obj).

FIG.1

FIG.2

FIG.3

EP 2 543 856 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004118117 A
- EP 2096277 A1
- EP 1741895 B1
- EP 2014894 B1
- IT BO20100579 A
- IT BO20100604 A
- IT BO20100605 A